Europäisches Patentamt

European Patent Office

Office européen des brevets

(19)

(11) Veröffentlichungsnummer : **0 349 867 B1**

(12) # EUROPÄISCHE PATENTSCHRIFT

(45) Veröffentlichungstag der Patentschrift :
**16.09.92 Patentblatt 92/38**

(51) Int. Cl.$^5$ : **A23L 1/221**

(21) Anmeldenummer : **89111556.0**

(22) Anmeldetag : **24.06.89**

(54) **Verfahren zur Herstellung von Gewürzzubereitungen.**

(30) Priorität : **04.07.88 DE 3822560**

(43) Veröffentlichungstag der Anmeldung :
**10.01.90 Patentblatt 90/02**

(45) Bekanntmachung des Hinweises auf die
Patenterteilung :
**16.09.92 Patentblatt 92/38**

(84) Benannte Vertragsstaaten :
**AT BE CH DE ES FR GB GR IT LI LU NL SE**

(56) Entgegenhaltungen :
**EP-A- 0 052 574**
**EP-A- 0 249 095**
**US-A- 3 965 267**

(56) Entgegenhaltungen :
**JOURNAL OF FOOD SCIENCE, Band 50, Nr. 3,
Mai/Juni 1985, Seiten 599-601, Chicago, Illinois, USA; C.A. PESEK et al.: "SpiceQuality:
Effect of Cryogenic and Ambient Grinding on
Volatiles"**

(73) Patentinhaber : **KOHLENSÄUREWERK
DEUTSCHLAND GMBH
Melkenweg 1
W-5462 Bad Hönningen (DE)**

(72) Erfinder : **Geister, Harry
Robert-Koch-Strasse 5
W-5840 Schwerte/Ruhr (DE)**

(74) Vertreter : **Lauer, Dieter, Dr.
c/o Kali-Chemie AG Postfach 220
Hans-Böckler-Allee 20
W-3000 Hannover 1 (DE)**

**Beschreibung**

Die Erfindung betrifft ein Verfahren zur Herstellung von Gewürzzubereitungen, die nach dem Verfahren erhältlichen Gewürzzubereitungen und ihre Verwendung.

Gewürzzubereitungen, Gewürzmischungen und dergleichen sind seit alters her bei der Herstellung von Nahrungsmitteln verwendet worden. War zunächst vorwiegend die Erhöhung der Haltbarkeit der betreffenden Lebensmittel beabsichtigt, beispielsweise bei der Konservierung mit Salz oder einem Gemisch von Salz mit Salpeter, steht heute die Verbesserung des Geschmacks und auch die Erhöhung der Verdaulichkeit der Nahrungsmittel im Vordergrund. In vielen Fällen erzielt man durch Gewürzzubereitungen, Gewürzmischungen oder Gewürzextrakte auch eine optische Aufbereitung der betreffenden Lebensmittel, wobei die Aromagebung gelegentlich in den Hintergrund tritt. Hier seien Gurkentöpfe erwähnt, deren Gehalt an Senfsamen eine merkbare Aromatisierung des Nahrungsmittels nicht bewirkt und daher die Konsumenten wohl im wesentlichen optisch auf Senfsamen anzusprechen scheinen. Prinzipiell ist dies eine Verschwendung wertvoller Grundstoffe. Beispiele für optisch, aber auch geschmacklich positiv beeinflußte Nahrungsmittel sind beispielsweise mit Mohn oder Sesam bestreute Backwaren, mit Pfeffer dekorierte Dauerwürste oder Käseprodukte.

Die Aromaabgabe von unzerkleinerten Gewürzen ist verhältnismäßig gering. Ferner setzen sie den Zähnen häufig einen hohen Widerstand entgegen, und ergeben andererseits beim Zerkauen eine oft zu hohe Aroma - konzentration. Daher sind eine Reihe von Zerkleinerungsverfahren für Gewürze entwickelt worden.

So ist es bekannt, Gewürzzubereitungen durch Quetschen des Ausgangematerials in Walzwerken herzustellen. Abgesehen davon, daß ölhaltige Gewürze wie Sesam in der Walzapparatur schwer zu entfernende, unhygienische Rückstände bilden und daher einen hohen Aufwand für die Reinigung der Apparatur bedingen, wird beim Quetschen durch die auftretende Wärme ein Aromaverlust beobachtet. Ein anderes Verfahren zur Herstellung zerkleinerter Gewürzzubereitungen besteht im Vermahlen des Ausgangs- materials. Abgesehen davon, daß ölhaltige Gewürzmaterialien nicht ohne weiteres zu vermahlen sind, führt auch die beim Mahlen auftretende Wärme zu hohen Aromaverlusten. Zwar kann man Aromaverluste durch Mahlverfahren, die unter Einwirkung von Kälte erfolgen, verringern. Unter Einwirkung von Kälte lassen sich auch ölhaltige Materialien vermahlen. Das erhaltene Mahlgut ist dann zwar aufgeschlossen, bietet dem Auge jedoch keinerlei Anreize dar und ist auch nicht aromastabil.

Ein solches Mahlverfahren wird von C.A. Pesek, L.A. Wilson und E.G. Hammond in J. Food Sci. 50 (1985), Seiten 599 bis 601 beschrieben. Der Veröffentlichung kann keine Angabe über die Temperatur, bei der die Vermahlung erfolgt, entnommen werden.

Die Gebrauchsanleitung für "Kompakt-Küchenmaschinen, Mulinette Universal Electronic (Gerätetypen 889-890-038-951)" der Firma Moulinex[R] beschreibt Küchengeräte, die unter anderem mit rotierenden Messern ausgerüstet werden können und harte oder weiche Lebensmittel zerkleinern können. Hinweise, im Rahmen der Herstellung von Gewürzzubereitungen die Zerkleinerung bei tiefen Temperaturen vorzunehmen, finden sich in dieser Gebrauchsanleitung nicht.

Aufgrabe der Erfindung ist es, ein Verfahren zur Verfügung zu stellen, welches die Nachteile der vorbekannten Verfahren überwindet. Diese Aufgabe wird durch das erfindungsgemäße Verfahren gelöst.

Das erfindungsgemäße Verfahren zur Herstellung von Gewürzzubereitungen, wobei man die Gewürze mit schneidenden Werkzeugen ohne Gegenschneide zerkleinert, ist dadurch gekennzeichnet, daß man das zu zerkleinernde Gut auf eine Temperatur abkühlt, die zwischen -20 °C und -70 °C liegt.

In einer bevorzugten Ausgestaltung zerkleinert man die Gewürze mit einem oder mehreren rotierenden Messern als schneidendem Werkzeug ohne Gegenschneide. Das rotierende Messer bzw. die rotierenden Messer können mit einer Umdrehungszahl von etwa 50 bis 5000, vorzugsweise von etwa 1.500 bis 5.000 Umdrehungen pro Minute (U/min) rotieren. Umdrehungszahlen von etwa 2.500 bis 5.000 U/min sind besonders bevorzugt.

Es bestehen verschiedene Möglichkeiten, die zu zerkleinernden Gewürze und die schneidenden Werkzeuge ohne Gegenschneide, insbesondere rotierende Messer, in Kontakt zu bringen. Hierzu kann man beispielsweise die Schwerkraft ausnutzen oder die Gewürze mit einem Gasstrom gegen die Schneidwerkzeuge führen. Es ist auch möglich, die schneidenden Werkzeuge gegen die Gewürze zu führen. Vorzugsweise führt man jedoch die Gewürze gegen die schneidenden Werkzeuge. Geeignete Vorrichtungen, in denen ein zu zerkleinerndes Gut gegen rotierende Messer geführt werden kann, sind dem Fachmann an sich bekannt. Besonders gut geeignet sind sogenannte Schneidmischer (Kutter). Derartige Kutter wurden bislang zur Zerkleinerung von Fleisch oder Speck verwendet und besitzen Messerköpfe mit einem oder mehreren, gewöhnlich 2 bis 12, rotierenden Messern. Das zu zerkleinernde Gut wird im allgemeinen in einer Schüssel gelagert und mit dieser Schüssel, die drehbar angebracht ist, gegen die rotierenden Messer geführt.

Das erfindungsgemäße Verfahren, in Kuttern durchgeführt, besitzt nicht nur den Vorteil, daß das zu zerkleinernde Gut nicht mehr, wie bei Mühlen üblich, in die Höhe transportiert werden muß; es hat sich auch gezeigt, daß der Zeitaufwand für die Reinigung der Zerkleinerungsapparatur etwa halbiert werden kann.

Im erfindungsgemäßen Verfahren zur Herstellung von Gewürzzubereitungen erfolgt die Zerkleinerung der Gewürze unter Einwirkung von Kälte, z.B. durch direktes oder indirektes Kühlen.

Die Einwirkung von Kälte kann so erfolgen, daß man die Gewürze vor dem Zerkleinern kühlt. Man kann auch während des Zerkleinerns kühlen. Die Einwirkung von Kälte kann natürlich auch vor und während des Zerkleinerns erfolgen.

Die Einwirkung von Kälte kann beispielsweise indirekt erfolgen. So kann das zu zerkleinernde Gewürz in Kühlvorrichtungen gelagert werden. Ferner können beispielsweise der Zuführung dienende Vorrichtungteile, die schneidenden Werkzeuge, Siebeinrichtungen, ggf. Verpackungseinrichtungen etc. mittels an sich bekannter Vorrichtungen gekühlt werden.

Die direkte Einwirkung von Kälte wird bevorzugt. Die direkte Einwirkung von Kälte erfolgt insbesondere durch direkten Kontakt der zu zerkleinernden Gewürze mit einem Kühlmedium, vorzugsweise einem inerten Kühlmedium. Unter inerten Kühlmedien werden solche Medien verstanden, die mit den Gewürzen keine chemischen oder enzymatischen Reaktionen eingehen. Als inertes Kühlmedium können beispielsweise $CO_2$, $N_2$, $N_2 O$, $SF_6$, Edelgase und dem Fachmann bekannte andere, inerte Kühlmedien verwendet werden; man kann natürlich auch Gemische einsetzen. Bevorzugte Kühlmedien sind $CO_2$ sowie $N_2$, insbesondere $CO_2$. Das Kühlmedium wird in einer Menge von etwa 0,1 bis etwa 40 Gew.-%, bezogen auf das zu zerkleinernde Gewürz, eingesetzt. Die Menge an benötigtem Kühlmedium kann geringer sein, wenn die Kutterapparatur bereits abgekühlt ist. Dies ist beispielsweise dann der Fall, wenn das erfindungsgemäße Verfahren mehrfach unmittelbar nacheinander im selben Kutter durchgeführt wird. Die Installation von separaten Kühlorganen ist bei der direkten Kühlung mit einem Kühlmedium nicht notwendig.

In einer Variante wird das inerte Kühlmedium, vorzugsweise $N_2$ oder $CO_2$, insbesondere $CO_2$, in Form eines kalten Gases eingesetzt.

In einer bevorzugten Variante setzt man das inerte Kühlmedium, vorzugsweise $N_2$ oder $CO_2$, insbesondere $CO_2$, als kondensierte Phase ein.

Insbesondere bevorzugt ist der Einsatz von $CO_2$ in fester Phase.

Als festes Kohlendioxid kann man sowohl Kohlensäureschnee als auch festes, komprimiertes $CO_2$ (Kohlensäure-Pellets) verwenden. Gute Resultate werden erhalten, wenn die zu zerkleinernden Gewürze mit festem $CO_2$ in einer Menge von etwa 0,1 bis etwa 40 Gew.-%, bevorzugt 3 bis 15 Gew.-%, insbesondere 4 bis 10 Gew.-%, bezogen auf die zu zerkleinernde Gewürzmenge, versetzt werden.

Es besteht natürlich die Möglichkeit, die Einwirkung von Kälte direkt und indirekt vorzunehmen.

Das zu zerkleinernde Gut wird im erfindungsgemäßen Verfahren auf Temperaturen abgekühlt, die vorzugsweise zwischen -30°C und -70 °C liegen.

Das inerte Kühlmedium, besonders wenn es sich um $N_2$ oder $CO_2$ handelt, kann nach der Zerkleinerung in die Umgebung bzw. in die Atmosphäre entlassen werden. Es besteht aber auch die Möglichkeit, das inerte Kühlmedium im Kreislauf zu führen. So kann es nach dem Abtrennen etwaig mitgeführter Inhaltsstoffe oder Schwebstoffe, sowie nach dem Abkühlen, Komprimieren, Verflüssigen oder Pelletieren erneut als Kühlmedium verwendet werden. Es kann auch, ggfs. als Teilstrom, zur Verdrängung der Luft aus Vorrichtungsteilen, zum Windsichten des zu zerkleinernden oder zerkleinerten Gutes, zum Inertisieren von Siebeinrichtungen, Vorrats- und Verpackungsbehältern etc. verwendet werden. Gut geeignet sind gasdicht ausgeführte Apparaturen, beispielsweise Vakuum-Schneidmischer, in denen es gelingt, die Zerkleinerung und Weiterverarbeitung der Gewürze ohne den möglicherweise schädlichen Einfluß von Luft durchzuführen.

Das erfindungsgemäße Verfahren kann aber auch in konventionellen, nicht gasdicht ausgeführten Kuttern mit Erfolg durchgeführt werden.

Es bestehen zwar keine Bedenken, das erfindungsgemäße Verfahren unter erniedrigtem oder erhöhtem Druck durchzuführen. Bevorzugt arbeitet man jedoch bei dem in der Umgebung herrschenden Normaldruck (Atmosphärendruck).

Die Gewürzzubereitungen, die nach dem erfindungsgemäßen Verfahren erhalten werden, können unmittelbar ihrer Weiterverwendung zugeführt werden. In einer Variante trennt man ggfs. entstehende Feinanteile von Grobanteilen ab. Diese Abtrennung erfolgt nach an sich bekannten Methoden, beispielsweise durch Windsichten (vorzugsweise mit Inertgas) und/oder Absieben. Die hierbei gewonnenen Fraktionen können dann getrennt einer Weiterverwendung zugeführt werden.

Nach dem erfindungsgemäßen Verfahren können beispielsweise Stengel bzw. Blätter von Petersilie, Lorbeer, Schnittlauch, Majoran, Basilikum, Oregano oder Rosmarin geschnitten werden. Als Beispiel für Zwiebeln, die nach dem erfindungsgemäßen Verfahren zerkleinert werden können, sind beispielsweise Lauchzwiebeln, Gemüsezwiebeln oder Knoblauch anzuführen.

Es können Gewürze mit mehr oder weniger großem Wassergehalt zerkleinert werden. Vorzugsweise eignet sich das Verfahren zur Zerkleinerung von Gewürzen mit einem Wassergehalt unterhalb etwa 10 Gew.-%,

vorzugsweise unterhalb etwa 5 Gew.-%. Beispiele für Gewürze, die nach dem erfindungsgemäßen Verfahren zerkleinert werden können, sind Ingwer, Johannisbrot, Kardamom, Koriander, Kümmel, Mohn, Muskatblüte, Nelken, Paprika-Schoten, Paprika-Früchte, Piment, Pfeffer, z.B. grüner, weißer oder schwarzer Pfeffer, Chili-Pfeffer, Senfsamen, Sesam, Sonnenblumenkerne, Vanille, Wacholderbeeren oder Zimt.

Besonders gut geeignet ist das erfindungsgemäße Verfahren für fett-, wachs-, und/oder ölhaltige Samen, beispielsweise Sesam- oder Sonnenblumenkerne. Völlig überraschend erhält man nach dem erfindungsgemäßen Verfahren ohne Aromaverlust geschnittene Gewürzzubereitungen. Nach bislang bekannten Verfahren konnte man lediglich kalt vermahlene oder gequetschte Gewürzzubereitungen erhalten.

In einer anderen bevorzugten Variante werden als zu zerkleinernde Gewürze im erfindungsgemäßen Verfahren solche Gewürze eingesetzt, welche mit einer oder mehreren Schalen umhüllt sind, beispielsweise grüne oder schwarze Pfefferkörner. Völlig überraschend zeigt sich, daß es bei der Arbeitsweise nach dem erfindungsgemäßen Verfahren gelingt, die Schalenbestandteile, welche pulverförmig anfallen, und die Kernbestandteile, welche das Grobgut bilden, auf einfache Weise unter größtmöglicher Aromaschonung voneinander zu trennen, beispielsweise durch einfaches Absieben oder Windsichten. Die Vorteile dieser völlig überraschenden Wirkung des erfindungsgemäßen Verfahrens auf durch Schalen umhüllte Samen soll am Beispiel des schwarzen Pfeffers erläutert werden, gelten aber sinngemäß auch für andere durch Schalen umhüllte Samen.

Schwarzer Pfeffer, der sich durch einen hohen Gehalt an ätherischen Ölen auszeichnet, ist die unreif geerntete und getrocknete Frucht des Pfefferstrauches.

Weißer Pfeffer ist die reif geerntete und durch Vergären und Abreiben der Schale gewonnene, hellbraune Frucht des Pfefferstrauches. Zwar ist der Anteil an ätherischen Ölen geringer als beim schwarzen Pfeffer, dennoch ist weißer Pfeffer - auch aufgrund seiner Hellfarbigkeit - ein weitverbreitetes Gewürz, unentbehrlich beispielsweise für Wurst- und Fleischwaren, wie aus F. Rosengarten, Jr., The Book of Spices (1969), Seiten 352 bis 361 zu entnehmen ist.

In den schwarzen Pfefferkörnern sind die Inhaltsstoffe, die die Schärfe des Pfeffers bedingen, (im folgenden Schärfestoffe genannt) und die Inhaltsstoffe, die das Aroma bewirken (im folgenden Aromastoffe genannt), nich homogen verteilt. Es ist vielmehr bekannt, daß im Kern ein Großteil der Schärfestoffe und in der Schale ein Großteil der Aromastoffe vorhanden sind. Nun ist bereits ein Verfahren bekannt, Schale und Kern mittels Schleifmaschinen zu separieren, wodurch die getrennte Gewinnung von Schärfestoffen und Aromastoffen möglich wird. Zwar ist das hierbei erhaltene, hellfarbige Kernmaterial als Gewürz dem weitaus teureren weißen Pfeffer gleichwertig. Da jedoch in den bekannten Schleifmaschinen die im Gut auftretende Wärme mit Luft abgeführt wird, ist eine aromaschonende Verfahrensweise so nicht möglich. Nach einem anderen Verfahren werden lediglich die Schärfestoffe gewonnen. Dazu wird das schwarze Pfefferkorn kalt vermahlen, mit einem Lösungsmittel, z.B. $CO_2$ unter überkritischen Bedingungen extrahiert, und die Schärfestoffe isoliert. Der Extraktionsrückstand, der bis zu 90 % des aufgegebenen Gutes beträgt, muß verworfen werden. Die gewonnenen, dunklen Pfefferextrakte, die dem Kundenwunsch nach einem hellfarbigen Extrakt noch nicht entsprechen, müssen zudem in einem weiteren Schritt mit Aktivkohle entfärbt werden.

Anders als bei dem bekannten Verfahren gestattet nun die überraschende Wirkung des erfindungsgemäßen Verfahrens, daß nämlich beim Zerkleinern von schalenhaltigen Früchten oder Samen, z.B. schwarzem Pfeffer, die Schale in Feingut, der Kern in Grobgut überführt wird, die aromaschonende Trennung von Schale und Kern. Zunächst ist es möglich, das dunkel gefärbte Schalenpulver und das hellgefärbte Kernmaterial per se einer Verwendung als Gewürz oder zur Herstellung von Gewürzmischungen oder Lebensmitteln zuzuführen. Es ist natürlich möglich, das als Grobgut vorliegende Kernmaterial vorher noch einer weiteren Zerkleinerungsoperation zu unterwerfen.

Man kann natürlich auch Kernmaterial und Schalenpulver in bestimmten Mengenverhältnissen mischen und dadurch die Schärfe und den Aromagehalt der erhaltenen Mischung festlegen.

Schließlich kann man auch das Schalenpulver und/oder das Kernmaterial einer Extraktion unterwerfen und Inhaltsstoffe gewinnen. Je nach Extraktionsbedingungen kann der Schärfegrad der Extrakte und auch des Extraktionsgutes eingestellt werden.

Wenn die Verfahrensführung bei der Extraktion so gewählt wird, daß die Inhaltsstoffe nicht vollständig extrahiert werden, kann das teilextrahierte Material aufgrund seines Restgehaltes in Inhaltsstoffen und seiner optisch vorteilhaften Eigenschaften noch als Gewürz verwendet werden.

Das Kernmaterial liefert Extrakte, die sich durch hohe Ausbeute, bedingt durch die aromaschonende Zerkleinerung, sowie durch ihre Hellfarbigkeit auszeichnen, wodurch sich eine anschließende Entfärbungsstufe erübrigt.

Durch die erfindungsgemäße Zerkleinerung unter aromaschonenden Bedingungen besitzen Gewürze, Gewürzpräparate, Gewürzextrakte oder Gewürzmischungen, die unter Verwendung der nach dem erfindungsgemäßen Verfahren erhaltenen pulverisierten Schale oder des als Grobgut erhaltenen Kerns hergestellt wurden, einen hohen Würzwert.

Die Zeitdauer, während der man die schneidenden Werkzeuge ohne Gegenlager auf die Gewürze einwirken läßt, ist im erfindungsgemäßen Verfahren an sich nicht begrenzt. Nach Möglichkeit dehnt man die Behandlungsdauer nicht über etwa 5 Minuten aus. Nach dem erfindungsgemäßen Verfahren ist es möglich, den Zerkleinerungszustand des Gutes zu beeinflussen. Ein im wesentlichen als Grobgut vorliegendes Material erhält man, wenn man die schneidenden Werkzeuge nur kurz, beispielsweise zwischen etwa 10 Sekunden bis zu etwa 1 Minute, auf das Gut einwirken läßt, eine verhältnismäßig geringe Umdrehungszahl der Messer, beispielsweise etwa 100 bis 500 Touren wählt und eine geringe Messeranzahl, beispielsweise 1 oder 2 Messer vorsieht. Dehnt man die Bearbeitungszeit aus, beispielsweise über etwa 1 bis 5 Minuten, wählt eine verhältnismäßig hohe Umdrehungszahl der Messer, etwa 2500 bis 5000 U/min, und sieht eine größere Zahl Messer vor, beispielsweise 6 bis 12, so erhält man ein feineres Gut, bis hin zu einem Pulver. Die jeweiligen Bedingungen hinsichtlich Bearbeitungsdauer, Drehzahl der Messer und Anzahl der Messer, die vom aufgegebenen Gut, vom verwendeten Kutter sowie natürlich vom gewünschten Zerkleinerungsgrad abhängt, kann der Fachmann durch orientierende Versuche leicht ermitteln.

Einen Einfluß auf die Zeitdauer, die zur Zerkleinerung der Gewürze notwendig ist, hat überraschenderweise auch die Temperatur des gekühlten Gutes. Arbeitet man mit weniger kaltem Gut, beispielsweise im Bereich von etwa -20°C bis etwa -30°C, dauert die Zerkleinerung auf den gewünschten Zerkleinerungsgrad länger, als wenn man mit kälterem Gut, beispielsweise im Bereich von etwa -50 °C und tiefer arbeitet. Da das zerkleinerte Gut, wenn es auf tiefere Temperaturen, also etwa -50 °C und tiefer, abgekühlt ist, auch eine größere Kältereserve besitzt und damit auch bei weiteren Verfahrensoperationen wie Sieben oder Verpacken noch kalt vorliegt, ist aus verfahrenstechnischen Gründen das Arbeiten zwischen etwa -50 °C bis -70 °C vorteilhaft, wenn auch größere Mengen an Kältemittel benötigt werden.

Nach den Verfahren, wie sie aus dem Stand der Technik bekannt sind, sind nur gemahlene oder gequetschte Gewürzzubereitungen zu erhalten.

Geschnittene Gewürzzubereitungen, erhältlich nach dem erfindungsgemäßen Verfahren, sind neu und ebenfalls Gegenstand der Erfindung.

Unter den erfindungsgemäßen geschnittenen Gewürzzubereitungen sind besonders zu erwähnen geschnittener Sesam, geschnittene Sonnenblumenkörner, geschnittener Senfsamen, geschnittener Kümmel, geschnittener Koriander, geschnittene grüne, weiße und/oder schwarze Pfefferkörner, geschnittane Wacholderkörner, geschnittener Piment, geschnittener Mohn, geschnittener Chili-Pfeffer, Gewürzzubereitungen in Form des, nach dem erfindungsgemäßen Verfahren beim Zerkleinern von mit Schalen umhüllten Gewürzen, erhältlichen Schalenmaterials oder in Form des Kernmaterials, insbesondere das Schalenmaterial von schwarzem Pfeffer und das Kernmaterial von schwarzem Pfeffer, sowie Gemische das Schalen- und Kernmaterials, insbesondere von schwarzem Pfeffer.

Die nach den erfindungsgemäßen Verfahren erhältlichen geschnittenen Gewürzzubereitungen können feinteilig vorliegen. Ihre Partikelgröße beträgt dann bis zu etwa 2 Mikrometer. Sie unterscheiden sich von konventionell zerkleinerten Gewürzzubereitungen durch höheren Gehalt an Inhaltsstoffen und eine gleichmäßige Körnung.

Die nach den erfindungsgemäßen Verfahren erhältlichen geschnittenen Gewürzzubereitungen können auch als Grobgut vorliegen. Die Partikelgröße beträgt etwa 2 Mikrometer bis hin zu Partikeln von etwa 4000 Mikrometer und größer, beispielsweise zwischen etwa 100 und 2000 Mikrometer. Gegenüber konventionell zerkleinerten Gewürzen mit dieser Partikelgröße zeichnen sie sich durch hohen Gehalt an Inhaltsstoffen, gleichmäßigen Schnitt und gleichmäßige Körnung aus.

Die erfindungsgemäßen Gewürzzubereitungen können aber auch Mischungen von Feingut und Grobgut enthalten.

Besonders zu erwähnen sind Pfeffer, insbesondere schwarzen Pfeffer enthaltende oder daraus bestehende Gewürzzubereitungen, die Pfeffer-Schalenmaterial als Feingut und Pfeffer-Kernmaterial als Grob- oder Feingut enthalten.

In solchen Mischungen ist der Schärfe- und Aromagrad gezielt einstellbar.

Verwendung finden die erfindungsgemäß hergestellten Gewürzzubereitungen in der Fleisch-, Wurstwaren-, Käse-, Fisch-, Backwaren-, Feinkostindustrie. Weiterhin lassen sie sich beispielsweise in der Aromaindustrie sowie der Pharmaindustrie, z.B. als Aromaträger, verwenden.

Die nach dem erfindungsgemäßen Verfahren erhaltenen Gewürzzubereitungen können, ggf. nach Trennung in Fein-und Grobgut, Klassifizierung und Verpackung per se verwendet werden.

In einer Variante finden die Gewürzzubereitungen Verwendung zur Herstellung von Gewürzmischungen, beispielsweise durch Vermischen mit anderen Gewürzen und/oder mit Hilfsstoffen, wie Kochsalz, Salpeter, Genußsäuren, Zucker, Zuckerderivaten oder Emulgatoren. Derartige Zubereitungen sind z.B. bekannt aus "Die Fleischwirtschaft" **1977**, S. 831 bis 837 und S. 1125 bis 1132. Es ist möglich, die Gewürze und/oder Hilfsstoffe vor der Durchführung des erfindungsgemäßen Verfahrens zu vereinigen. Die Bestandteile der Gewürzmischung werden bie der Zerkleinerung nach dem erfindungsgemäßen Verfahren aromaschonend zerkleinert und gleichzeitig gut durchmischt, so daß sich eine separate Mischerstufe erübrigt. Es ist aber natürlich auch möglich, die Bestandteile der Gewürzmischung während oder nach der Durchführung des erfindungsgemäßen Verfahrens zu vermischen.

In einer weiteren Variante werden die nach dem erfindungsgemäßen Verfahren erhaltenen Gewürzzubereitungen zur Herstellung von Gewürzextrakten verwendet. Beispielsweise kann man nach der erfindungsgemäßen aromaschonenden Zerkleinerung von schwarzen Pfefferkörnern das Schalenpulver und das als Grobgut anfallende Kernmaterial trennen, z.B. durch Absieben, und getrennt extrahieren, beispielsweise mit $CO_2$ unter überkritischem Druck. Man erhält dann einen schwarzen Extrakt des Schalenpulvers bzw. einen hellfarbigen Extrakt des Kerns. Die Extrakte können zur Würzung von Nahrungsmitteln, beispielsweise in der Fleisch- und Wurstwarenindustrie, verwendet werden. In vergleichbarer Weise können natürlich auch andere Gewürze zerkleinert und in Form der Extrakte in der Nahrungsmittelindustrie verwendet werden.

Die nach dem erfindungsgemäßen Verfahren erhaltenen Gewürzzubereitungen können weiterhin zur Herstellung von Nahrungsmitteln verwendet werden. Aus der Vielzahl der herstellbaren Nahrungsmittel seien nur einige wenige aufgezählt. So kann das hellfarbige, als Grobgut anfallende Kernmaterial, welches bei der erfindungsgemäßen Zerkleinerung von schwarzem Pfeffer erhalten wird, zur Herstellung von Fleisch-, Wurst- oder Käseprodukten verwendet werden. Hierzu kann es in die Masse der Fleisch-, Wurst- oder Käsewaren eingearbeitet werden und/oder - mit gleichzeitig dekorativem Effekt - auf der Fleisch-, Wurst- oder Käseoberfläche aufgetragen werden, z.B. in Form einer Tauchmasse. Die pulverförmig anfallende Schale von schwarzem Pfeffer dient zur Würzung beispielsweise von Katenrauchwurst, Schinken, Speck etc. Auf der Oberfläche des Lebensmittels angebracht, ist neben dem hohen Würzwert ein zusätzlicher Vorteil, daß eine dunkle Färbung ohne Zusatz eines künstlichen Farbstoffes erzielt wird.

Senfkörner, nach den erfindungsgemäßen Verfahren zerkleinert, werden u.a. für die Herstellung von Gurkentöpfen oder Fischkonserven verwendet und bieten nicht nur optische Effekte, sondern wirken deutlich aromagebend.

Mohn, Sesam und/oder Sonnenblumenkerne, nach dem erfindungsgemäßen Verfahren zerkleinert, dienen beispielsweise zur Dekoration von Backwaren, z.B. von Brötchen. Die geschmackgebende Wirkung ist größer als üblicherweise feststellbar, obwohl die Gewürzzubereitungen erheblich sparsamer dosiert werden können. Zudem haften die geschnittenen Gewürze auf der Oberfläche des Gebäcks und benötigen kein Bindemittel wie Wasser.

Gewürzmischungen, enthaltend nach dem erfindungsgemäßen Verfahren zerkleinerte Gewürzzubereitungen sowie Salz, können für die Trockenpökelung beispielsweise von Schweinefleisch verwendet werden.

Die hellfarbigen Extrakte, die aus dem Kernmaterial von erfindungsgemäß zerkleinerten schwarzen Pfefferkörnern erhalten werden, werden beispielsweise zur Herstellung von Dekorwürzungen eingesetzt.

Diese Beispiele sollen nur eine sehr begrenzte Auswahl der Nahrungsmittel darstellen, zu deren Herstellung die erfindungsgemäß hergestellten Gewürzzubereitungen, Mischungen und -Extrakte verwendet werden können.

Das erfindungsgemäße Verfahren besitzt überraschende Vorteile. Unter anderem sind zu nennen:

– Die Herstellung einer Vielzahl von Gewürzzubereitungen ist unter größter Aromaschonung, zeitsparend und bei geringerem Arbeitsaufwand möglich.

– Öl-, fett- und wachshaltige Gewürze können unter hygienischen Bedingungen zerkleinert werden, wobei der Umfang der bei bekannten Verfahren üblichen Reinigung von Vorrichtungen etc. beim erfindungsgemäßen Verfahren deutlich verringert werden kann.

– Schalenhaltige Gewürze, insbesondere Pfeffer, können nach dem erfindungsgemäßen Verfahren derart zerkleinert werden, daß Schalenmaterial und Kernmaterial getrennt voneinander gewonnen werden und somit getrennt voneinander verwendet oder weiterverarbeitet werden können.

– Die erfindungsgemäß erhaltenen Gewürzzubereitungen besitzen einen hohen dekorativen Wert (Dekor-Gewürze), geben ihr Aroma jedoch leicht ab und können daher sparsamer dosiert werden.

– Eine Vielzahl von Gewürzen kann erstmalig in geschnittener Form zur Verfügung gestellt werden.

– Die Gewürzzubereitungen, die nach dem erfindungsgemäßen Verfahren erhalten werden, sind gleichmäßig strukturiert sowie in Farb- und Würzwert stabil.

– Die Verwendung inertisierender Kältemedien, vorzugsweise von $CO_2$ in flüssiger oder fester Form ($CO_2$-Schnee, $CO_2$-Pellets) verhindert zuverlässig negative Einflüsse von Luft oder Feuchtigkeit auf die zerkleinerten Gewürze.

– Das erfindungsgemäße Verfahren kann in bekannten Schneidmischern (Kuttern) durchgeführt werden, so daß in vielen Betrieben die Anschaffung teurer Maschinen zur Gewürzzerkleinerung nach dem erfindungsgemäßen Verfahren nicht notwendig ist.

Die Erfindungen sind in den folgenden Beispielen erläutert, ohne ihren Schutzumfang zu begrenzen.

Beispiel 1 (Zerkleinerung von schwarzem Pfeffer):

Ein Kutter (Schneidmischer, Hersteller: Krämer und Grebe GmbH & Co KG, Biedenkopf/Deutschland), mit einem um eine stehende Achse umlaufenden, schüsselförmigen Behälter von 45 l Fassungsvermögen und 6 um eine liegende Achse umlaufenden Messern wurde zunächst mit $CO_2$-Schnee versetzt, um die Luft im Behälter durch $CO_2$ zu verdrängen. Der Kutter wurde mit 5 kg schwarzen Pfefferkörnern befüllt und mit $CO_2$-Schnee versetzt. Nachdem das Gut auf etwa - 30 °C abgekühlt war (die Temperaturmessung erfolgte durch ein in die Pfefferkörner gebrachtes Thermometer), wurden die Messer in Rotation versetzt (Umdrehungszahl etwa 2.500 U/min) und das zu zerkleinerte Gut durch Drehen des Kutter-Behälters gegen die rotierenden Messer geführt. Nach etwa 3 Minuten wurde das kalte, zerkleinerte Gut aus dem Kutter in eine, vorher mit $CO_2$ gespülte Schüttelsiebeinrichtung überführt. Über ein Maschensieb (Siebweite: 0,39 mesh = 0,355 mm) wurde das Gut in Grob- und Feinanteile getrennt. Die abgesiebten Feinanteile bestanden im wesentlichen aus der pulverisierten schwarzen Schale der Pfefferkörner. Die hellfarbig anfallenden Grobanteile, die auf dem Sieb zurückblieben, bestanden im wesentlichen aus dem geschnittenen Kern der Pfefferkörner. Feinanteile und Grobanteile wurden sofort nach der Absiebung verpackt.

Beispiel 2 (Zerkleinerung von Sesam):

Der Kutter aus Beispiel 1 wurde wie dort beschrieben mit $CO_2$-Schnee vorbehandelt und mit 10 kg Sesamkörnern befüllt. Kohlensäureschnee wurde eingeleitet, bis das Gut eine Temperatur von etwa -30 °C erreicht hatte (gemessen durch Eintauchen eines Thermometers in das zu zerkleinernde Gut). Es erwies sich als vorteilhaft, wenn auch nicht unabdingbar notwendig, die Schneidmesser ebenfalls zu kühlen. Die Messer wurden auf eine Umdrehungszahl von etwa 5.000 U/min gebracht und das Gewürzgut durch Drehen des Kutter-Behälters gegen die Messer geführt. Nach etwa 3 Minuten wurde der Zerkleinerungsvorgang unterbrochen, das zerkleinerte Sesam gesiebt (Siebwerte: 0,63 mesh) und Fein- bzw. Grobgut sofort abgepackt.

Eine Probe des nach dem erfindungsgemäßen Verfahren geschnittenen Sesam-Grobgutes wurde auf Raumtemperatur gebracht. Das recht voluminös anfallende, zerkleinerte Gut besaß eine Partikelgröße von etwa 3,9 bis 4,0 Mikrometer und entwickelte ein intensives Aroma. Es unterschied sich von Sesam, das nach bekannten Verfahren zerquetscht worden war, durch den gleichmäßigen Schnitt und gleichmäßige Körnung.

Beispiel 3 (Zerkleinerung von schwarzem Pfeffer unter Verwendung von Trockeneis-Pellets):

In einen Vakuum-Schneidmischer der Fa. Krämer & Grebe mit einem Fassungsvermögen von 65 l wurden 60 kg Pfeffer und etwa 3 kg $CO_2$-Pellets eingefüllt und vermischt. Nach einer Wartezeit von etwa 1 Minute , in deren Verlauf sich das Gut auf etwa -50 °C abkühlte, wurden die 6 Schneidmesser auf etwa 5.000 U/min gebracht und das zu zerkleinernde Gut durch Drehen des Behälters gegen die Messer geführt. Die Drehzahl der Schüssel betrug etwa 19 Umdrehungen/Min. Nach etwa 5 Minuten wurde die Zerkleinerung beendet, das noch kalte Mahlgut in eine Rüttelsiebapparatur überführt und der Feinanteil abgesiebt (Maschenweite: 0,355 mm). Der Feinanteil, der im wesentlichen aus pulverisiertem Schalenmaterial besteht, und das Grobgut, welches im wesentlichen aus dem hellfarbigen Kernmaterial besteht, wurden getrennt voneinander der Weiterverarbeitung zugeführt. Alle Operationen wurden bei Atmosphärendruck durchgeführt.

Bei einer Wiederholung des Versuchs unter ansonsten gleichen Bedingungen wurde das Gut auf etwa -70 °C abgekühlt. Diesmal konnte die Zerkleinerung bereits nach etwa 3 Minuten beendet werden.

Beispiel 4 (Zerkleinerung von Mohn):

Nach dem Beispiel 2 jedoch bei einer Temperatur von etwa -70 °C, wurden 12 kg Mohnkörner zerkleinert. Die Dauer des Zerkleinerungsvorgangs etwa 5 Minuten, und es wurde ein im wesentlichen pulverförmiges Produkt erhalten.

Beispiel 5 (Verwendung des gemäß Beispiel 1 erhaltenen Grobgutes als hellfarbiger Dekorpfeffer):

2.600 g des hellfarbigen, im wesentlichen geschnittenen Kernmaterial von schwarzen Pfefferkörnern enthaltenden Grobguts aus Beispiel 1 wurden in eine Gelatine-Überzugsmasse, erhalten durch Auflösen von 260 g käuflicher Speisegelatine in 0,1 l sterilisiertem Wasser, verrührt. Eine Salami wurde in die Tauchmasse eingetaucht, nach dem Herausheben angetrocknet, erneut in die Tauchmasse eingetaucht und getrocknet. Nach dem Trocknen erhält man eine Pfeffersalami, deren Hülle, mit dem hellfarbigen, geschnittenen Pfeffer dekoriert war und trotz vergleichsweise geringeren Pfeffergehaltes eine sehr hohe Würzkraft besaß.

Beispiel 6 (Verwendung des nach Beispiel 1 erhaltenen pulverisierten Schalenmaterials als schwarzer Dekorpfeffer):

100 g des bei der Verfahrensweise nach Beispiel 1 anfallenden, pulverisierten Schalenmaterials von schwarzem Pfeffer wurde in eine Gelatinelösung eingerührt, welche durch Lösen von 100 g käuflicher Speisegelatine in 1 l Wasser erhalten wurde. Ein Schwarzwälder Schinken wurde in die erhaltene Suspension getaucht und getrocknet. Man erhält einen schwarz gefärbten, gepfefferten Schwarzwälder Schinken, ohne daß ein Zusatz künstlicher Farbstoffe notwendig wäre.

Beispiel 7 (Verwendung der in Beispiel 2 erhaltenen geschnittenen Sesamkörner):

In eine Brötchenmasse üblicher Art wurde das gemäß Beispiel 2 erhaltene, geschnittene Sesam in einer Menge von etwa 80 g pro kg Teigmasse eingearbeitet. Nach den Formen der Brötchen wurde noch geschnittenes Sesam auf die Brötchen aufgestreut und diese dann wie üblich ausgebacken. Die fertigen Brötchen besaßen ein ausgeprägtes Sesamaroma, obwohl vergleichsweise weniger Anteil an Sesam als üblich in den Brötchen enthalten war.

## Patentansprüche

1. Verfahren zur Herstellung von Gewürzzubereitungen, wobei man die Gewürze mit schneidenden Werkzeugen ohne Gegenschneide zerkleinert, dadurch gekennzeichnet, daß man das zu zerkleinernde Gut auf eine Temperatur abkühlt, die zwischen -20°C und -70°C liegt.

2. Verfahren nach Anspruch 1, dadurch gekennzeichnet, daß man die Zerkleinerung mit einem oder mehreren rotierenden Messern vornimmt.

3. Verfahren nach Anspruch 2, dadurch gekennzeichnet, daß das oder die Messer mit einer Umdrehungszahl von 50 bis 5000 U/min, vorzugsweise von 1500 bis 5000 U/min rotieren.

4. Verfahren nach einem der vorhergehenden Ansprüche, dadurch gekennzeichnet, daß man die Gewürze gegen das oder die rotierenden Messer führt.

5. Verfahren nach einem der vorhergehenden Ansprüche, dadurch gekennzeichnet, daß man die zu zerkleinernden Gewürze vor der Zerkleinerung kühlt.

6. Verfahren nach einem der vorhergehenden Ansprüche, dadurch gekennzeichnet, daß man die zu zerkleinernden Gewürze vor und während der Zerkleinerung kühlt.

7. Verfahren nach einem der vorhergehenden Ansprüche, dadurch gekennzeichnet, daß man mit einem inerten Kühlmedium, vorzugsweise $N_2$, $N_2O$, $CO_2$, insbesondere bevorzugt $CO_2$ kühlt, wobei man das kühlmedium in einer Menge von 0,1 bis 40 Gew.-%, bezogen auf das zu Zerkleinernde Gut, einsetzt.

8. Verfahren nach einem der vorhergehenden Ansprüche, dadurch gekennzeichnet, daß man das inerte Kühlmedium, ggf. unter Abtrennung darin mitgeführter Inhaltsstoffe, im Kreislauf führt.

9. Verfahren nach einem der vorhergehenden Ansprüche, dadurch gekennzeichnet, daß man als inertes Kühlmedium $N_2$ oder $CO_2$ in flüssiger Form einsetzt.

10. Verfahren nach einem der vorhergehenden Ansprüche, dadurch gekennzeichnet, daß man $CO_2$ in fester Form, vorzugsweise in Form von Kohlensäureschnee, einsetzt.

11. Verfahren nach einem der vorhergehenden Ansprüche, dadurch gekennzeichnet, daß man das zu zerkleinernde Gut auf eine Temperatur abkühlt, die zwischen -30°C und -70°C, liegt.

12. Verfahren nach einem der vorhergehenden Ansprüche, dadurch gekennzeichnet, daß man ggf. entstehende Feinanteile von Grobanteilen abtrennt.

13. Verfahren nach Anspruch 12, dadurch gekennzeichnet, daß man fett-, wachs- und/oder ölhaltige Samen, z.B. Sesam, Senfsamen, Kümmel, Koriander, einsetzt.

**14.** Verfahren nach Anspruch 12, dadurch gekennzeichnet, daß man durch Schalen umhüllte Samen, z.B. grüne und/oder schwarze Pfefferkörner, Wacholderkörner, Piment, vorzugsweise schwarze Pfefferkörner, einsetzt.

**15.** Gewürzzubereitungen, erhältlich nach einem der Ansprüche 1 bis 14.

**16.** Verwendung der Gewürzzubereitungen nach Anspruch 15 zur Herstellung von Gewürzextrakten und/oder Gewürzmischungen.

**17.** Verwendung der Gewürzzubereitungen nach Anspruch 15 zur Herstellung von Nahrungsmitteln.

**Claims**

**1.** A method for the production of spice preparations, in which the spices are comminuted with cutting tools without a counter-cutting edge, characterised in that the matter which is to be comminuted is cooled to a temperature which is between -20°C and -70°C.

**2.** A method according to Claim 1, characterised in that the comminution is performed with one or more rotating blades.

**3.** A method according to Claim 2, characterised in that the blade or blades rotate(s) at a speed of 50 to 5000 rpm, preferably of 1500 to 5000 rpm.

**4.** A method according to one of the preceding Claims, characterised in that the spices are guided against the rotating blade or blades.

**5.** A method according to one of the preceding Claims, characterised in that the spices to be comminuted are cooled before comminution.

**6.** A method according to one of the preceding Claims, characterised in that the spices to be comminuted are cooled before and during comminution.

**7.** A method according to one of the preceding Claims, characterised in that cooling is carried out with an inert cooling medium, preferably $N_2$, $N_2O$, $CO_2$, particularly preferably $CO_2$, the cooling medium being used in a quantity of 0.1 to 40% by weight, relative to the matter to be comminuted.

**8.** A method according to one of the preceding Claims, characterised in that the inert cooling medium is recycled, optionally with the separation of contents entrained therewith.

**9.** A method according to one of the preceding Claims, characterised in that $N_2$ or $CO_2$ in liquid form is used as inert cooling medium.

**10.** A method according to one of the preceding Claims, characterised in that $CO_2$ is used in solid form, preferably in the form of carbon dioxide snow.

**11.** A method according to one of the preceding Claims, characterised in that the material to be comminuted is cooled to a temperature which is between -30°C and -70°C.

**12.** A method according to one of the preceding Claims, characterised in that any fine contents which are produced are separated from coarse contents.

**13.** A method according to Claim 12, characterised in that fat-containing, wax-containing and/or oil-containing seeds, for instance sesame, mustard seeds, caraway seeds, coriander, are used.

**14.** A method according to Claim 12, characterised in that seeds surrounded by shells, for instance green and/or black peppercorns, juniper grains, pimento, preferably black peppercorns, are used.

**15.** Spice preparations, obtainable according to one of Claims 1 to 14.

**16.** The use of the spice preparations according to Claim 15 for the production of spice extracts and/or spice

EP 0 349 867 B1

mixtures.

17. The use of the spice preparations according to Claim 15 for the production of foodstuffs.

**Revendications**

I. Procédé de production de préparations d'épices ,selon lequel on fragmente sans contre-couteau les épices avec des outils coupants ,procédé caractérisé en ce qu'on refroidit,jusqu'à une température comprise entre - 20°C et -70°C,la marchandise à fragmenter .

2. Procédé selon la revendication I , caractérisé en ce qu'on effectue la fragmentation avec un ou plusieurs couteaux rotatifs .

3. Procédé selon la revendication 2 , caractérisé en ce que le ou les couteaux tourne(nt) à une vitesse de rotation de 50 à 5 000 tours par minute , avantageusement I 500 à 5 000 tours/minute .

4. Procédé selon l'une des revendications précédentes , caractérisé en ce qu'on guide les épices vers et contre le ou les couteau(x) rotatif(s) .

5. Procédé selon l'une des revendications précédentes , caractérisé en ce qu'on refroidit ,avant la fragmentation ,les épices ou aromates à fragmenter .

6. Procédé selon l'une des revendications précédentes , caractérisé en ce qu'on refroidit , avant et rendant la fragmentation, les épices à fragmenter .

7. Procédé selon l'une des revendications précédentes , caractérisé en ce qu'on refroidit à l'aide d'un milieu inerte de refroidissement, avantageusement $N_2$ , $N_2O$ , $CO_2$, notamment et de préférence $CO_2$ ,en utilisant le milieu de refroidissement en une quantité de 0,I à 40 % en poids, par rapport à la marchandise à fragmenter .

8. Procédé selon l'une des revendications précédentes , caractérisé en ce qu'on fait circuler en circuit fermé le milieu inerte de refroidissement,éventuellement en séparant les substances contenues et qui y ont été entraînées .

9. Procédé selon l'une des revendications précédentes , caractérisé en ce qu'on utilise comme milieu inerte de refroidissement $N_2$ ou $CO_2$ sous forme liquide .

I0. Procédé selon l'une des revendications précédentes , caractérisé en ce qu'on utilise $CO_2$ sous forme solide ,avantageusement sous forme de neige carbonique .

II. Procédé selon l'une des revendications précédentes , caractérisé en ce qu'on refroidit,jusqu'à une température comprise entre -30°C et -70°C,la marchandise à fragmenter .

I2. Procédé selon l'une des revendications précédentes , caractérisé en ce qu'on sépare les constituants fins éventuellement présents d'avec les constituants grossiers .

I3. Procédé selon la revendication I2 , caractérisé en ce qu'on utilisé en ce qu'on utilise des graines contenant des matières grasses , des cires et/ou de l'huile ,par exemple du sésame , des graines de moutarde , du cumin ou du coriandre .

I4. Procédé selon la revendication I2 , caractérisé en ce qu'on utilise des graines entourées d'enveloppes , par exemple des grains de poivre vert et/ou noir,des grains de genièvre , du piment , avantageusement des grains de poivre noir .

I5. Préparations d'épices ou d'aromates , que l'on peut obtenir selon l'une des revendications I à I4 .

I6. Utilisation des préparations d'épices ou d'aromates selon la revendication I5 pour préparer des extraits d'épices et/ou des mélanges d'épices .

I7. Utilisation des préparations d'épices ou d'aromates selon la revendication I5 pour produire des aliments.